(19)

Europäisches
Patentamt
European
Patent Office
Office européen
des brevets

(11) **EP 2 133 973 B1**

(12) **EUROPEAN PATENT SPECIFICATION**

(45) Date of publication and mention
of the grant of the patent:
**06.05.2015 Bulletin 2015/19**

(51) Int Cl.:
***H02H 3/02*** *(2006.01)*

(21) Application number: **08721810.3**

(86) International application number:
**PCT/JP2008/054394**

(22) Date of filing: **11.03.2008**

(87) International publication number:
**WO 2008/114650 (25.09.2008 Gazette 2008/39)**

(54) **CIRCUIT PROTECTION DEVICE**

SCHALTUNGSSCHUTZEINRICHTUNG

DISPOSITIF DE PROTECTION DE CIRCUIT

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **16.03.2007 JP 2007068813**

(43) Date of publication of application:
**16.12.2009 Bulletin 2009/51**

(73) Proprietor: **Tyco Electronics Raychem K.K.
Kawasaki-shi, Kanagawa 213-8535 (JP)**

(72) Inventor: **SUZUKI, Katsuaki
Inashiki-shi
Ibaraki 300-0626 (JP)**

(74) Representative: **Johnstone, Douglas Ian et al
Baron Warren Redfern
Cambridge House
100 Cambridge Grove
Hammersmith
London
W6 0LE (GB)**

(56) References cited:
**WO-A2-98/56095       JP-A- 11 512 557
JP-A- 11 512 598       JP-A- 2000 040 503
JP-A- 2000 067 710     JP-A- 2003 318 005
JP-A- 2005 174 815     US-A- 5 737 160
US-A- 5 864 458**

**Description**

TECHNICAL FIELD

The present invention relates to a circuit protection device (or a circuit protection element). More specifically, it relates to a circuit protection device comprising a bimetal switch and a PTC component as well as an electrical circuit (or an electrical apparatus) having such a circuit protection device. Such a circuit protection device may be used as a protection device in electrical circuits, which use various high voltage or high current batteries, in electric vehicles, cordless vacuum cleaners, power tools, wireless stations, and the like, for example.

RELATED ART

Circuit protection devices are incorporated into circuits for various types of circuits in order to protect electrical/electronic apparatuses and/or electrical/electronic parts incorporated in such circuits in case voltage higher than the rated voltage is applied to and/or current higher than the rated current flows through the circuits.

As such a circuit protection device, using a bimetal switch and a PTC component which are connected in parallel has been proposed (see the Patent Reference 1 below). With such a circuit protection device, under normal operating conditions, i.e. with voltage at or below the rated voltage and current at or below the rated current, substantially all the current flowing through the circuit will pass through contacts in the bimetal switch; if, for example, there is an overcurrent, the bimetal part of the bimetal switch will rise in temperature to separate and open the contacts, and the current will be diverted to the PTC component. As a result, the PTC component will go into a high-temperature, high-resistance state and trip due to the overcurrent, substantially cutting off the current flow through the PTC component. At this point, the high temperature of the PTC component maintains a bimetal part at high temperature, so that the bimetal switch maintains the opened state. In other words, the latch condition of the bimetal switch is maintained. In such a circuit protection device, it is said that arcs do not occur at the contacts of the bimetal switch since there is no need to switch the current.

Patent Reference 1

Japanese Patent Kohyo Publication 11-512598

The International Patent Application Publication WO 98/56095 discloses a circuit protection system with a PTC device connected in parallel with a switch. A current sensing relay senses an overcurrent and opens the switch to direct the current though the PTC device.

DISCLOSURE OF THE INVENTION

PROBLEM TO BE SOLVED BY THE INVENTION

The present inventor, having closely studied the above circuit protection device, has noticed that in a circuit protection device wherein the PTC component is merely connected in parallel to the bimetal switch, arcs may be generated at the contacts in the bimetal switch, and in the worst case, the contacts may be welded. When such welding occurs, the device does not function as a circuit protection device and cannot protect the electrical/electronic apparatus and/or electrical/electronic parts incorporated into the circuit. Therefore, the problem to be solved by the present invention is to provide a circuit protection device as above mentioned with a further improved potential to protect circuits.

MEANS TO SOLVE THE PROBLEM

The present invention provides a circuit protection device according to the appended claim 1.

EFEECTS OF THE INVENTION

When the circuit protection device according to the present invention is incorporated into an electrical circuit, the formation of a welded portion at the contacts in the bimetal switch may be further suppressed. As a result, the circuit protection function of the circuit protection device is further enhanced. Thus, the present invention further provides an electric circuit into which the circuit protection device according to the present invention is incorporated.

BRIEF DESCRIPTION OF THE DRAWINGS

    [Figure 1] Figure 1 shows a predetermined circuit A into which a predetermined electrical apparatus (or part) B and a bimetal switch C are incorporated.

[Figure 2] Figure 2 shows an electric circuit into which a circuit protection device according to the present invention is incorporated.

[Figure 3] Figure 3 shows a schematic side view of an example of a more specific embodiment of a circuit protection device according to the present invention.

[Figure 4] Figure 4 shows a schematic side view of an example of a more specific embodiment of a circuit protection device according to the present invention.

[Figure 5] Figure 5 shows a current wave profile and a voltage wave profile measured in Example 1.

[Figure 6] Figure 6 shows a current wave profile and a voltage wave profile measured in Example 2.

[Figure 7] Figure 7 shows a current wave profile and a voltage wave profile measured in Example 3.

EXPLANATION OF THE REFERENCES

1 -        circuit protection device
2 -        PTC component
3 -        circuit
4 -        bimetal switch
6 -        electric element
10, 10' -  lead
12 -       PTC component
16 -       bimetal switch
18, 18' -  contact
20 -       terminal section
22 -       electrode layer
23 -       PTC element
24 -       electrode layer
26, 26' -  insulating layer
30 -       space

EMBODIMENTS TO CARRY OUT THE INVENTION

Having studied why welding occurred at the contacts in the bimetal switch, it has been concluded that the following concept is a possibility. However, the present invention described above and below is based on facts experimentally confirmed by the present inventor. Therefore, this concept is one of possibilities which are able to explain the present invention, and whether the concept is appropriate or not does not unduly limit the concept of the present invention.

The opening action of the contacts in a bimetal switch is macroscopically an instantaneous action. However, when such action is observed microscopically, it can be seen as an action in which the contacts gradually separate from each other in a very short period within such separation of the contacts. At the beginning of this very short period, a rated current flows between the contacts, and at the end of such very short period, current is interrupted between the contacts. In other words, the resistance between the contacts at the beginning of the very short period is substantially in the state of zero, and at the end of such period, the resistance has increased to be infinite. Therefore, the current flows and the resistance increases greatly within this very short period, so that electric power is consumed between the contacts.

On the other hand, it is possible to think that the phenomenon of the bimetal contact welding occurs through temperature rising of the contacts as a result of the effect of excessive voltage and/or excessive current. Therefore, when the energy consumed between the contacts becomes great, the risk of welding occurring will increase.

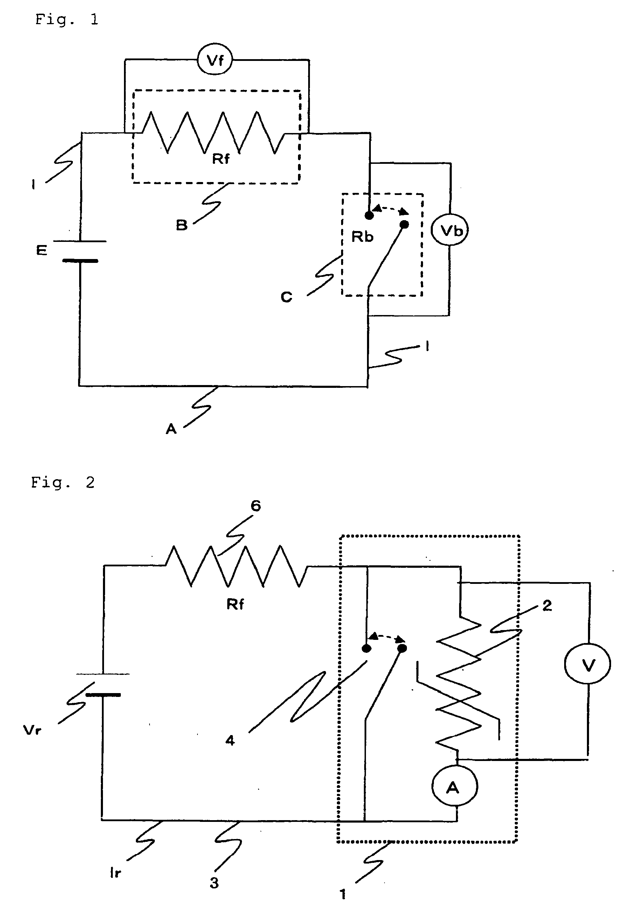

In view of electric power being a measure of the energy, the present inventor has therefore reached an idea in that the occurrence or non-occurrence of welding between the contacts can be determined by using the electric power, in particular its maximum value, consumed between the contacts in the above mentioned very short term as a measure. This electric power consumption between the contacts and its maximum value are calculated as explained below with reference to the circuit in Figure 1.

A predetermined circuit A is considered in Figure 1. Typically into such a circuit, a predetermined electrical apparatus (or part) B is incorporated in order that the circuit functions as intended, and the circuit has a predetermined resistance Rf. A bimetal switch C is also incorporated into the circuit so that the circuit may be opened in case an abnormal voltage is applied to and/or an abnormal current flows through the circuit. A predetermined voltage E is applied to the circuit.

As described above, the predetermined circuit is configured such that the predetermined voltage is applied to the electrical apparatus B so that a predetermined current flows through the circuit. Such voltage and such current are called a rated voltage Vr and a rated current Ir, respectively. Such rated voltage and such rated current mean that, when the voltage Vr is applied to the circuit, the current Ir flows through the circuit, and therefore the circuit has a resistance of Vr/Ir.

Therefore, when Vr/Ir = Rf, the circuit which is said to have its rated voltage and its rated current of Vr and Ir respectively corresponds to a circuit wherein E = Vr, and an electrical apparatus having a resistance of Vr/Ir as its resistance (Rf) is incorporated in Figure 1. In other words, the circuit A shown in Figure 1 is equivalent to a circuit wherein its rated voltage and its rated current are Vr and Ir, respectively (given that E = Vr, and I = Ir), and a specific resistance of such a circuit is Vr/Ir.

In the circuit shown in Figure 1 , it is assumed that the voltage E is applied to the circuit, the electrical apparatus has a resistance of Rf, and the bimetal switch has a resistance of Rb as a resistance between the contacts. It is further assumed that the voltage applied to the electrical apparatus is Vf, and the voltage between the contacts of the bimetal switch is Vb.

In this case, when it is assumed that the current flowing through the circuit A is I and the whole circuit is considered, the following is obtained:

$$I = E/(Rf+Rb).$$

When it is assumed that the electric power consumed between the contacts of the bimetal switch is P, the following is obtained:

$$P = I \times Vb.$$

Since Vb = E-Vf, the following is obtained:

$$P = I \times (E-Vf)$$

Since Vf = IxRf, the following is obtained:

$$P = I \times (E-I \times Rf) = IE-I^2 \times Rf$$

When the electric power consumption of P which is expressed as a function of I is differentiated with I, the following is obtained:

$$P' = E-2I \times Rf.$$

Since P' becomes 0 when the electric power consumption reaches the maximum, the following is obtained:

$$P' = E-2I \times Rf = 0.$$

When the current I at this point is assumed to be Imax, the following is obtained:

$$Imax = E/(2Rf) = (1/2) \times (E/Rf).$$

When the Vb at this point is assumed to be Vmax, the following is obtained:

$$Vmax = E-Vf = E-Imax \times Rf = E-[E/(2Rf)] \times Rf = E/2.$$

In the above state, E/Rf is equal to the value of the current flowing through the circuit when Rb is zero. It is impossible that Rb becomes zero. However, when Rb may substantially be ignored in comparison with Rf, that is, when the contacts of the bimetal switch are sufficiently touching to be in a closed state, Rf>>Rb so that there is no problem in that Rb is assumed to be substantially zero. Such a state may be considered to be a state where the rated voltage Vr is applied as the voltage E to the circuit A and the rated current Ir is flowing through the circuit A.

Thus, when the electric power consumption between the contacts of the bimetal switch becomes the maximum, the following is obtained:

$$Imax = E/(2Rf) = (1/2) \times (Vr/Rf) = (1/2) \times Ir$$

$$Vmax = E/2 = (1/2) \times Vr$$

Therefore, when the electric power consumption between the contacts becomes the maximum, the current flowing between the contacts becomes a half of the rated current, i.e. a current of Ir/2, and the voltage applied between the contacts becomes a half of the rated voltage, i.e. a voltage of Vr/2.

In brief, the voltage and the current, when the electric power consumption becomes the maximum between the contacts of the bimetal switch which has been incorporated in series in a predetermined circuit as a circuit protection device, will be half values of the rated voltage and the rated current respectively of the circuit. Therefore, the resistance between the contacts at this point is (Vr/2) / (Ir/2) = Vr/Ir = Rated Voltage / Rated Current. In other words, this resistance is a specific resistance of the circuit.

It is presumed that, in the vicinity of this resistance, the electric power consumption between the contacts becomes the maximum, as a result of which arcing is likely to be generated between the contacts thereby increasing the possibility of the contact welding; thus this resistance (= Vr/Ir) is also tentatively called "arcing resistance". It is noted that the term "arcing resistance" used in this specification is used only as a matter of convenience, and it should be kept in mind that, although it is presumed that there is some sort of correlation with the occurrence of the arcing between the contacts, it cannot necessarily be presumed that the resistance between the contacts becomes this arcing resistance upon the occurrence of the arcing.

The inventor has studied further and discovered experimentally that, when the resistance of the PTC component electrically connected in parallel to the bimetal switch is equal to or less than the arcing resistance, the possibility of welding occurring between the contacts is reduced. The "resistance of the PTC component" as stated herein is a resistance (an electrical resistance) of the PTC component after it has been connected in parallel to the bimetal switch. When solder was used to connect a commercially available PTC component to the bimetal switch, the PTC component is in the state wherein it already tripped once because of the heat caused by connecting with solder (i.e. in the state after thermally tripping), and the present specification calls the resistance of the PTC component in this state as the "resistance of the PTC component". This resistance is also called as a "resistance after activation" in the technical field related to the present invention. It is noted that when electric welding is used to connect the PTC component to the bimetal switch, it may be possible that the heat conducted to the PTC component is not enough to cause tripping. In such a case, the PTC component will trip for the first time when an overcurrent flows through the PTC component for the first time (i.e. the PTC component tripping electrically), and the resistance afterwards corresponds to the "resistance after activation" as described above. In the present invention, therefore, the "resistance after activation" means the resistance after the commercially available PTC component has tripped for the first time either thermally or electrically. The PTC component before solder connecting (i.e. the commercially available PTC component itself) has a resistance smaller than such resistance (this smaller resistance is also called as a "basic (or reference) resistance" in the related art).

As described previously, when incorporating into a predetermined circuit a circuit protection device in which a bimetal switch and a PTC component connected in parallel, current which has flowed through the bimetal switch can be shunted to the PTC component upon opening of the bimetal switch. For example, in the case wherein a ratio of the resistance of the PTC component to the specific resistance (or the arcing resistance) of the circuit is equal to or less than 1.1, preferably equal to or less than 1.0, more preferably equal to or less than 0.9, most preferably equal to or less than 0.4, particularly equal to or less than 0.3, and more particularly equal to or less than 0.2, for example equal to or less than 0.15, a half of the current that would have flowed between the contacts without the presence of the PTC component can be shunted to the PTC component when the electric power consumption between the contacts becomes the maximum. As a result, the possibility of arcing between the contacts is decreased. In the most preferred embodiment, the ratio of the resistance of the PTC component to the specific resistance (or the arcing resistance) of the circuit is equal to or less than 0.2, and for example equal to or less than 0.15. It is noted that in the circuit protection device according to the present invention, the basic resistance of the PTC component is preferably equal to or less than 4/5, and more preferably equal to or less than 2/3 of the specific resistance (or the arcing resistance), and for example equal to or less than 1/2 of the specific resistance.

Conversely, when the resistance of the PTC component is larger than the arcing resistance of the circuit, for example twice larger than the arcing resistance, the arc generation may not be sufficiently suppressed even if a PTC component has been incorporated in the circuit and welding may occur.

In the circuit protection device according to the present invention, the bimetal switch used in the circuit protection device is a switch using a bimetal element, and a well-known one may be used. This is a switch configured such that, when current flowing through the bimetal switch exceeds a predetermined current value and becomes excessive, the contacts which are touching each other will separate by means of generated heat.

Among such bimetal switches, those, for example, that use platinum, gold, silver, copper, carbon, nickel, tin, lead, or an alloy of these metals (for example tin-lead alloy) as a contact material thereof may be given as examples of ones that are particularly preferred for the use in the circuit protection device according to the present invention. Above all, a bimetal switch using silver as the contact material is particularly preferred. It is noted that bimetal switches having a relatively narrow gap between the contacts may suitably be used in the circuit protection device of the present invention. Such bimetal switch having a gap of preferably 0.4 - 4 mm, in particular 2 mm or less, more preferably 0.7 - 2 mm, particularly preferably 0.8 - 1.5 mm, and for example around 1 mm may suitably be used in the circuit protection device.

The PTC component that is connected in parallel to the bimetal switch in the circuit protection device according to the present invention may be a conventional PTC component that is itself used as a circuit protection device, and its electrically conductive element may be made of a ceramic or of a polymer material. A particularly preferred PTC component is one that is called a polymer PTC component, and a PTC component having an electrically conductive polymer element in which an electrically conductive filler (for example carbon, nickel, or nickel-cobalt filler) is dispersed in a polymer material (for example a polyethylene, a polyvinylidene fluoride, etc.) can be suitably used.

When the circuit protection device according to the present invention is incorporated into a predetermined circuit and performs its intended function normally, substantially all of the current flowing through the circuit will pass through the bimetal switch. Therefore, in the circuit protection device according to the present invention, the resistance of the PTC component has a resistance value that is at least 10 times, preferably at least 50 times, more preferably at least 100 times, and particularly preferably at least 300 times as large as the resistance that the bimetal switch inherently has (normally 0.5 - 20 milliohms).

Figure 2 shows a circuit 3 into which the circuit protection device 1 according to the present invention is incorporated. The circuit 3 has a predetermined electrical element (e.g. an electrical/electronic device or part, etc.) 6 and the circuit protection device 1 is connected in series to the element. The electrical element 6 is indicated with one resistance symbol, but this denotes a single electrical element or a group of a plurality of electrical elements included in the circuit 3. The resistance of such an electrical element is shown as Rf, which is a specific resistance of the circuit 3 and is calculated specifically by [the rated voltage (Vr) / the rated current (Ir)] of the circuit 3. Figure 2 shows an ammeter A and a voltmeter V incorporated thereinto for the purpose of measuring as explained below in the Examples.

The circuit protection device 1 according to the present invention comprises a PTC component 2 and a bimetal switch 4, which are electrically connected in parallel, or if not electrically connected in parallel, are configured so that they can be thus connected. A ratio of the resistance of the PTC component 2 to the specific resistance Rf of the circuit 3 is for example one or less, preferably one-half or less, more preferably 1/3 or less, for example 1/4 or less, and in particular 1/8 or less. Further, the PTC component has a resistance of for example at least 10 times, and preferably at least 100 times as large as the resistance that the bimetal switch 4 inherently has.

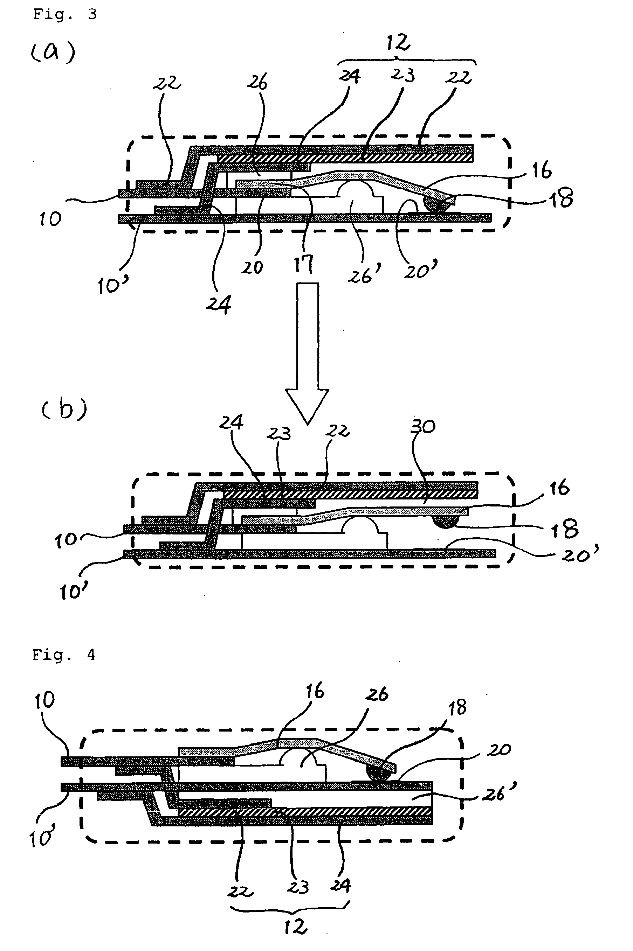

Specific embodiments of the circuit protection device 10 according to the present invention are shown as schematic side views in Figure 3 and Figure 4.

Figure 3 shows the states before and after (Figure 3(a) and Figure 3(b)) the bimetal switch is activated so that the contacts of the bimetal switch open in the circuit protection device according to the present invention which has a PTC component 12 and a bimetal switch 16 and which has been incorporated in an electrical circuit (only the leads 10 and 10' of the electrical circuit are shown). The leads 10 and 10' have terminal sections 20 and 20' at their ends respectively. The terminal section 20 is connected to the terminal section 17 of the bimetal switch. When the circuit is operating normally and appropriate current is flowing therethrough, i.e. when current is flowing via the bimetal switch 16, the terminal section 20' is in contact with the contact 18 of the bimetal switch 16 as shown in Figure 3(a). In this state, substantially all (or most) of the current flows from the lead 10 to the lead 10' via the bimetal switch 16.

In the illustrated embodiment, the PTC component 12 comprises a PTC element 23 and electrode layers 22 and 24 disposed on both sides thereof, and an insulating layer 26 is present between the PTC component 12 and the lead. The PTC element and the electrode layers on both sides thereof may be similar to those used in the known PTC components, and the electrode layers may have leads on their outer surfaces. In such embodiment, such PTC element forms, in place of the shown PTC element 23, a PTC component together with the electrode layers (preferably metal foil electrodes) on the both sides of the PTC element, and also forms leads on the above mentioned outer surfaces in place of the shown electrode layers 22 and 24, which leads are connected to the leads 10 and 10' respectively. By incorporating the PTC component 12 and the bimetal switch 16 in the electrical circuit as described above, an electrical circuit is configured wherein these are electrically connected in a parallel relationship. It is noted that in the shown embodiment, another insulating layer 26' is disposed between the bimetal switch 16 and the lead 10'.

When an abnormal current flows through the electrical circuit so that the temperature of the bimetal switch 16 rises, the contacting state between the contact 18 and the terminal section 20' is dissolved. At this point, the current flowing through the electrical circuit flows instantaneously from the lead 10 to the electrode layer 22 of the PTC component, and shunts thereafter to the lead 10' via the PTC element 23 and the electrode layer 24. In this case, when the resistance of the PTC component after its activation is equal to or less than 1.1 times (X 1.1) as large as the specific resistance of the circuit, a relatively large ratio of the abnormal current can be shunted to the PTC component at the moment when the bimetal switch opens, so that the possibility of an arcing occurrence, welding occurrence or the like in the vicinity of the bimetal switch contacts is greatly reduced. After this, the PTC component will be in the trip state and substantially cut off the current flow.

In Figure 3, the broken line surrounding the circuit protection device according to the present invention denotes an element, for example a casing, a housing or the like which surrounds the circuit protection device. It is preferable that the protection device according to the present invention further has such an element, which is useful in preventing dissipation of heat (which is generated by the abnormal current) from the bimetal switch and the PTC component, so that the latched state of the bimetal switch can be maintained. Further in the shown embodiment, since the PTC component 12 and the bimetal switch 16 are adjacent but separated by a relatively narrow space 30 so that the heat from the PTC component upon tripping thereof caused by the abnormal current can easily affect the bimetal switch, such adjacent condition is advantageous in maintaining the latched state of the bimetal switch.

Figure 4 also shows a further embodiment of the circuit protection device according to the present invention in the state before the bimetal switch is activated. In this embodiment, the bimetal switch 16 and the PTC component are separated from each other. A lead 10' as well as insulating layers 26 and 26' are present between the bimetal switch 16 and the PTC component 12, as a result of which, compared with the embodiment in Figure 3, the PTC component 12 and the bimetal switch 16 are more separated so that the bimetal switch is less likely to be affected by the heat as previously explained. However, because the bimetal component and the PTC component are configured by merely overlapping one on the other, it is advantageous in manufacturing the device.

Example 1

Using a PTC component, a bimetal switch, and an electrical element (a resistor, its resistance Rf = 2.67$\Omega$) which are commercially available and described below, a circuit was constructed shown in Figure 2 while incorporating the circuit protection device into the circuit:

PTC component: manufactured by Tyco Electronics Raychem, product name: RXE010, basic resistance: 2.6 $\Omega$, resistance after activation: 4.21 $\Omega$.
Bimetal switch: manufactured by Sensata Technologies, product name: Thermal Protector 9700K21-215, contact gap: 1 mm, resistance of bimetal switch: 11.6 m$\Omega$.

DC 48V/18A (therefore the specific resistance = 2.67 $\Omega$ = Rf) which is double the maximum contact rating of the bimetal switch was applied, and the wave profile of the current

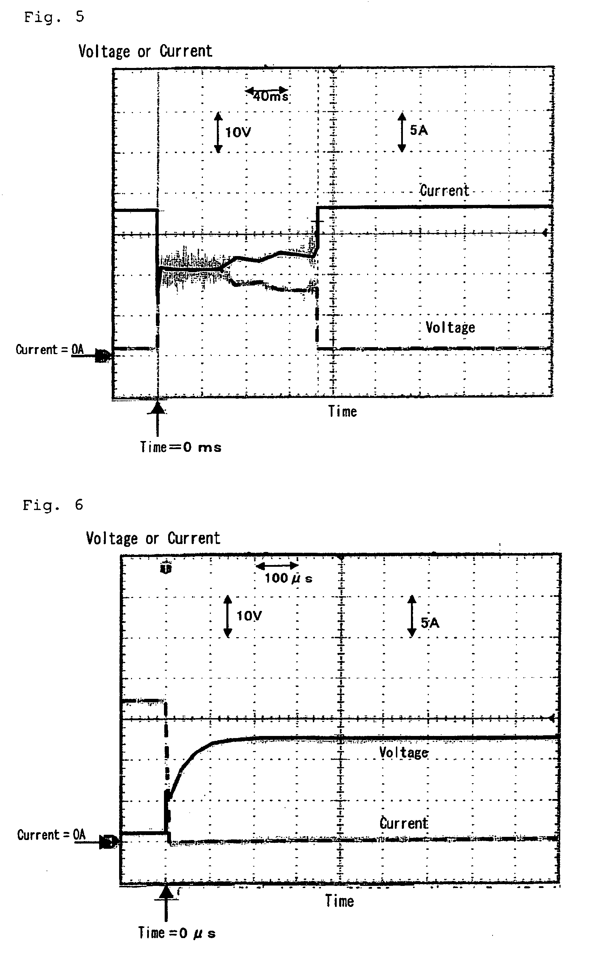

(current flowing through the bimetal switch) and the wave profile of the voltage (voltage between the both ends of the bimetal switch, i.e. the voltage drop across the bimetal switch) upon such application were measured with the ammeter A and the voltmeter V incorporated into the circuit shown in Figure 2. Figure 5 shows the wave profiles of the measured current and voltage (It is noted that the oscillating wave profiles are shown smoothed out). In the graph in Figure 5, the vertical axis denotes the voltage and current value, each graduation (a length of two-ended arrow) thereof being 5A and 10V, while the horizontal axis denotes time, each graduation thereof being 40ms (millisecond).

From Figure 5, it can be seen that about 146 ms after the start of the contact opening action of the bimetal switch (time = 0), the current and voltage values returned to those before the opening action of the contacts. Thus, in this Example, the circuit protection device did not perform its function. When the bimetal switch was checked, there was welding at the contacts.

Example 2

Except that the commercially available PTC component to be used was changed to another PTC component as shown below, Example 1 was repeated:

PTC component: manufactured by Tyco Electronics Raychem, product name: RXE025, basic resistance: 1.5 $\Omega$, resistance after activation: 2.31 $\Omega$.

Figure 6 shows the measured current and voltage wav% profiles. In the graph of Figure 6, the vertical axis denotes the voltage and current, each graduation (a length of the two-ended arrow) thereof being 5A and 10V, while the horizontal axis denotes time, each graduation thereof being 100 μs.

From Figure 6, it can be seen that the current flowing through the bimetal component is reduced instantaneously, and in other words it is being diverted to the PTC. Thus, in the preseNt Example, the circuit protection device performed its function.

Example 3

Except that the commercially available PTC component to be used was changed to a further PTC component as shown below, Example 1 was repeated:

PTC component: manufactured by Tyco Electronics Raychem, product name: RXE040, basic resistance: 0.67 Ω, resistance after activation: 1.02 Ω.

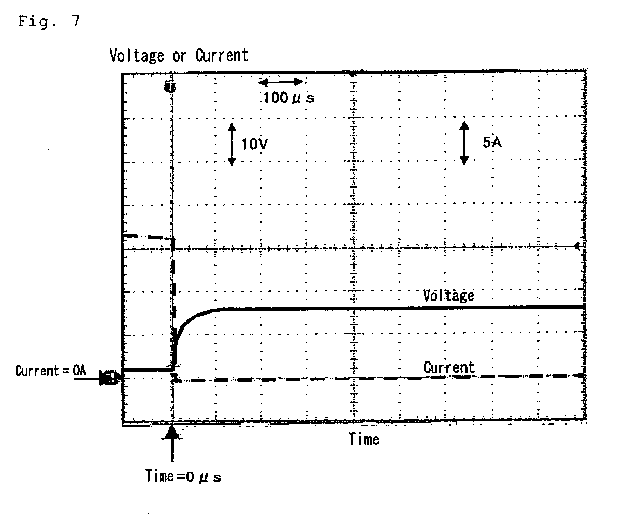

Figure 7 shows the measured current and voltage wave profiles. In the graph of Figure 7, the vertical axis denotes the voltage and current, each graduation (a length of the two-ended arrow) thereof being 5A and 10V, while the horizontal axis denotes time, each graduation thereof being 100 μs.

From Figure 7, it can be seen that the current flowing through the bimetal component is reduced instantaneously, and in other words it is being diverted to the PTC. Thus, in the present Example, the circuit protection device performed its function.

Example 4

Except that the commercially available PTC component to be used was changed to a further PTC component as shown below and also that the rated voltage/current was 48 V-DC/20 A (thus, the specific resistance was 2.4 Ω), Example 1 was repeated:

PTC component: manufactured by Tyco Electronics Raychem, product name: RXE135, basic resistance: 0.18 Ω, resistance after activation: 0.3 Ω.

In this Example also, the current and voltage measurement results were obtained which were similar to those of Example 3. Therefore, the circuit protection device in the present Example performed its function.

Example 5

Except that the commercially available PTC component to be used was changed to a further PTC component as shown below, Example 1 was repeated:

PTC component: manufactured by Tyco Electronics Raychem, product name: RXE020, basic resistance; 1.8 Ω, resistance after activation: 2.82 Ω).

In this Example also, the current and voltage measurement results were obtained which were similar to those of Example 3. Therefore, the circuit protection device in the present Example performed its function.

The results of the above Examples are summarized in the following Table 1:

Table 1

|  | basic resistance of PTC component $R_{PTCO}$ | resistance of PTC component after activation $R_{PTC}$ | specific resistance Rf | $R_{PTCO}$/Rf (upper row) $R_{PTC}$ /Rf (lower row) | performance of circuit protection device property |
|---|---|---|---|---|---|
| Example 1 | 2.6 Ω | 4.21 Ω | 2.67 Ω | 0.97 1.56 | × (not performed) |
| Example 2 | 1.5 Ω | 2.31 Ω | 2.67 Ω | 0.56 | ○ (performed) |

(continued)

|  | | basic resistance of PTC component $R_{PTCO}$ | resistance of PTC component after activation $R_{PTC}$ | specific resistance Rf | $R_{PTCO}$/Rf (upper row) $R_{PTC}$/Rf (lower row) | performance of circuit protection device property |
|---|---|---|---|---|---|---|
|  | | | | | 0.87 | |
| Example 3 | | 0.67 Ω | 1.02 Ω | 2.67 Ω | 0.25 0.38 | ○ (performed) |
| Example 4 | | 0.18 Ω | 0.3 Ω | 2.4 Ω | 0.075 0.125 | ○ (performed) |
| Example 5 | | 1.8 Ω | 2.82 Ω | 2.67 Ω | 0.67 1.08 | ○ (performed) |

## INDUSTRIAL APPLICABILITY

The circuit protection device according to the present invention can reduce the possibility of the arcing occurrence and the welding occurrence in the proximity of the contacts of the bimetal switch.

As known to those skilled in the art, the bimetal switch is a switch to act such that its contacts open due to heat, and comprises a bimetal element which is made of a heat sensitive material and at least one pair of mechanical contacts. Therefore, it would be understood by those killed in the art according to the above descriptions that other mechanical switch having contacts such as a relay (particularly an electromagnetic relay) can be used in place of the bimetal switch in the circuit protection device according to the present invention.

## Claims

1.    A circuit protection device (1) for incorporation into an electrical circuit (3), comprising an electrical/electronic apparatus (6) to be protected and in series to the circuit protection device (1), having a rated voltage and a rated current, the electrical circuit under normal conditions operating with a voltage at or below the rated voltage and a current at or below the rated current,
     wherein the circuit protection device (1) comprises a bimetal switch (4, 16) with contacts (18, 20') and a positive temperature coefficient, abbreviated as PTC, component (2, 12), and
     wherein the circuit protection device (1) is configured so that, under the normal operating conditions, substantially all of the current flowing through the circuit protection device (1) will pass through the contacts (18, 20') of the bimetal switch (4), and wherein, under overcurrent condition, a large ratio of current is configured to be shunted to the PTC component at the moment when the bimetal switch opens, **characterised in that**:

     the bimetal switch (4) and the PTC component (2, 12) are electrically connected in parallel by soldering; and
     the PTC component (2, 12) has a resistance, after its activation, that is equal to or less than 1.1 times as large as a specific resistance (Rf) of the electrical circuit (3) into which the circuit protection device (1) is to be incorporated,
     wherein the activation is when the PTC component (2, 12) trips into a high resistance state as a result of exposure to heat present when the bimetal switch (4, 16) and the PTC component (2, 12) are soldered to connect them in parallel; and
     wherein the specific resistance is calculated based on the rated voltage and the rated current of the electrical circuit (3) according to the following equation:

Rated Voltage (Vr)/Rated Current (Ir)= Specific Resistance (Rf).

2. The circuit protection device (1) according to Claim 1, **characterised in that** the PTC component (2, 12) has the resistance after its activation that is equal to or less than 0.9 times as large as the specific resistance.

3. The circuit protection device (1) according to Claim 2, **characterised in that** the PTC component (2, 12) has the resistance after its activation that is equal to or less than 0.4 times as large as the specific resistance.

4. The circuit protection device (1) according to any one of Claims 1 to 3, **characterised in that** the PTC component (2, 12) has a basic resistance before soldering that is equal to or less than two-thirds (2/3) of the specific resistance.

5. The circuit protection device (1) according to any one of Claims 1 to 4, **characterised in that** the PTC component (2, 12) has a basic resistance before soldering that is at least ten times as large as the resistance of the bimetal switch.

6. The circuit protection device (1) according to Claim 5, **characterised in that** the PTC component (2, 12) has the resistance that is at least 100 times as large as the resistance of the bimetal switch.

7. The circuit protection device (1) according to any one of Claims 1 to 6, wherein the PTC component (2, 12) is a polymer PTC component.

8. An electrical circuit (3) comprising the circuit protection device (1) according to any one of Claims 1 to 7.


**Patentansprüche**

1. Schaltungsschutzeinrichtung (1) zum Einbau in eine elektrische Schaltung (3), die eine zu schützende und in Reihe mit der Schaltungsschutzeinrichtung (1) befindliche elektrische/elektronische Vorrichtung (6) umfasst, die eine Nennspannung und einen Nennstrom hat, wobei die elektrische Schaltung unter normalen Bedingungen mit einer Spannung bei oder unterhalb der Nennspannung und einem Strom bei oder unterhalb des Nennstroms arbeitet, wobei die Schaltungsschutzeinrichtung (1) einen Bimetallschalter (4, 16) mit Kontakten (18, 20') und ein Bauelement (2, 12) mit positivem Temperaturkoeffizienten, abgekürzt als PTC, umfasst, und wobei die Schaltungsschutzeinrichtung (1) so konfiguriert ist, dass unter den normalen Betriebsbedingungen im Wesentlichen der gesamte Strom, der durch die Schaltungsschutzeinrichtung (1) fließt, durch die Kontakte (18, 20') des Bimetallschalters (4) hindurchgehen wird, und wobei sie dafür konfiguriert ist, dass unter einer Überstrombedingung in dem Augenblick, wenn der Bimetallschalter öffnet, ein großer Anteil des Stroms zu dem PTC-Bauelement nebengeschlossen wird, **dadurch gekennzeichnet, dass**:

der Bimetallschalter (4) und das PTC-Bauelement (2, 12) durch Löten elektrisch parallel verbunden sind und das PTC-Bauelement (2, 12) nach seiner Aktivierung einen Widerstand hat, der gleich dem 1,1-Fachen des spezifischen Widerstands (Rf) der elektrischen Schaltung (3), in welche die Schaltungsschutzeinrichtung (1) eingebaut werden soll, oder geringer als dieses ist, wobei die Aktivierung erfolgt, wenn das PTC-Bauelement (2, 12) im Ergebnis einer Wärmeeinwirkung, die vorhanden ist, wenn der Bimetallschalter (4, 16) und das PTC-Bauelement (2, 12) gelötet werden, um parallel verbunden zu werden, in einen Zustand mit hohem Widerstand schaltet, und wobei der spezifische Widerstand auf der Grundlage der Nennspannung und des Nennstroms der elektrischen Schaltung (3) nach der folgenden Gleichung berechnet wird:

$$\text{Nennspannung (Vr)/Nennstrom (Ir)} = \text{Spezifischer Widerstand (Rf).}$$

2. Schaltungsschutzeinrichtung (1) nach Anspruch 1, **dadurch gekennzeichnet, dass** das PTC-Bauelement (2, 12) nach seiner Aktivierung einen Widerstand hat, der gleich dem 0,9-Fachen des spezifischen Widerstands oder geringer als dieses ist.

3. Schaltungsschutzeinrichtung (1) nach Anspruch 2, **dadurch gekennzeichnet, dass** das PTC-Bauelement (2, 12) nach seiner Aktivierung einen Widerstand hat, der gleich dem 0,4-Fachen des spezifischen Widerstands oder geringer als dieses ist.

4. Schaltungsschutzeinrichtung (1) nach einem der Ansprüche 1 bis 3, **dadurch gekennzeichnet, dass** das PTC-Bauelement (2, 12) vor dem Löten einen Grundwiderstand hat, der gleich zwei Dritteln (2/3) des spezifischen Widerstands oder geringer als dieses ist.

5. Schaltungsschutzeinrichtung (1) nach einem der Ansprüche 1 bis 4, **dadurch gekennzeichnet, dass** das PTC-Bauelement (2, 12) vor dem Löten einen Grundwiderstand hat, der wenigstens zehnmal so groß wie der Widerstand des Bimetallschalters ist.

6. Schaltungsschutzeinrichtung (1) nach Anspruch 5, **dadurch gekennzeichnet, dass** das PTC-Bauelement (2, 12) einen Widerstand hat, der wenigstens 100-mal so groß wie der Widerstand des Bimetallschalters ist.

7. Schaltungsschutzeinrichtung (1) nach einem der Ansprüche 1 bis 6, worin das PTC-Bauelement (2, 12) ein Polymer-PTC-Bauelement ist.

8. Elektrische Schaltung (3), welche die Schaltungsschutzeinrichtung (1) nach einem der Ansprüche 1 bis 7 umfasst.

**Revendications**

1. Dispositif de protection de circuit (1) à incorporer dans un circuit électrique (3), comprenant un appareil électrique/électronique (6) à protéger et en série par rapport au dispositif de protection de circuit (1), présentant une tension nominale et une intensité nominale, le circuit électrique fonctionnant en condition normale avec une tension inférieure ou égale à la tension nominale et avec une intensité inférieure ou égale à l'intensité nominale, dans lequel le dispositif de protection de circuit (1) comprend un commutateur bimétallique (4, 16) avec des contacts (18, 20') et un composant (2, 12) à coefficient de température positif, abrégé en CTP, et dans lequel le dispositif de protection de circuit (1) est configuré de telle sorte que, dans les conditions normales de fonctionnement, essentiellement tout le courant circulant à travers le dispositif de protection de circuit (1) va passer à travers les contacts (18, 20') du commutateur bimétallique (4), et dans lequel, en condition de surtension, le courant est configuré pour être dérivé en une proportion importante vers le composant CTP au moment où le commutateur bimétallique s'ouvre, **caractérisé en ce que** :

le commutateur bimétallique (4) et le composant CTP (2, 12) sont raccordés électriquement en parallèle par soudage ; et
le composant CTP (2, 12) présente une résistance, après son activation, qui est inférieure ou égale à 1,1 fois une résistance spécifique (Rf) du circuit électrique (3) dans lequel le dispositif de protection de circuit (1) doit être incorporé,
dans lequel l'activation correspond au moment où le composant CTP (2, 12) passe à un état de résistance élevé en conséquence d'une exposition à de la chaleur présente lorsque le commutateur bimétallique (4, 16) et le composant CTP (2, 12) sont soudés pour les raccorder en parallèle ; et
dans lequel la résistance spécifique est calculée en se basant sur la tension nominale et l'intensité nominale du circuit électrique (3) selon l'équation suivante :

$$\text{Tension nominale (Vr)/Intensité nominale (Ir)} = \text{Résistance spécifique (Rf)}.$$

2. Dispositif de protection de circuit (1) selon la revendication 1, **caractérisé en ce que** le composant CTP (2, 12) présente une résistance après son activation qui est inférieure ou égale à 0,9 fois la résistance spécifique.

3. Dispositif de protection de circuit (1) selon la revendication 2, **caractérisé en ce que** le composant CTP (2, 12) présente une résistance après son activation qui est inférieure ou égale à 0,4 fois la résistance spécifique.

4. Dispositif de protection de circuit (1) selon l'une quelconque des revendications 1 à 3, **caractérisé en ce que** le composant CTP (2, 12) présente une résistance basique avant soudage qui est inférieure ou égale aux deux-tiers (2/3) de la résistance spécifique.

5. Dispositif de protection de circuit (1) selon l'une quelconque des revendications 1 à 4, **caractérisé en ce que** le composant CTP (2, 12) présente une résistance basique avant soudage qui représente au moins dix fois la résistance du commutateur bimétallique.

**6.** Dispositif de protection de circuit (1) selon la revendication 5, **caractérisé en ce que** le composant CTP (2, 12) présente une résistance qui représente au moins 100 fois la résistance du commutateur bimétallique.

**7.** Dispositif de protection de circuit (1) selon l'une quelconque des revendications 1 à 6, dans lequel le composant CTP (2, 12) est un composant CTP polymère.

**8.** Circuit électrique (3) comprenant le dispositif de protection de circuit (1) selon l'une quelconque des revendications 1 à 7.

Fig. 1

Fig. 2

Fig. 3

(a)

(b)

Fig. 4

Fig. 5

Voltage or Current

Time=0 ms

Fig. 6

Voltage or Current

Time =0 μ s

Fig. 7

Voltage or Current

100 μs

10V

5A

Voltage

Current = 0A

Current

Time

Time = 0 μs

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11512598 A
- WO 9856095 A